(19) Europäisches Patentamt
European Patent Office
Office européen des brevets

(11) EP 1 837 938 A1

(12) EUROPEAN PATENT APPLICATION
published in accordance with Art. 158(3) EPC

(43) Date of publication:
26.09.2007 Bulletin 2007/39

(51) Int Cl.:
$H01M\ 4/52^{(2006.01)}$ $\quad$ $H01M\ 4/06^{(2006.01)}$
$H01M\ 6/06^{(2006.01)}$

(21) Application number: 06731141.5

(22) Date of filing: 05.04.2006

(86) International application number:
PCT/JP2006/307193

(87) International publication number:
WO 2006/109637 (19.10.2006 Gazette 2006/42)

(84) Designated Contracting States:
AT BE BG CH CY CZ DE DK EE ES FI FR GB GR
HU IE IS IT LI LT LU LV MC NL PL PT RO SE SI
SK TR

(30) Priority: 06.04.2005 JP 2005109647

(71) Applicant: MATSUSHITA ELECTRIC INDUSTRIAL
CO., LTD.
Osaka 571-8501 (JP)

(72) Inventors:
• OKADA, Tadaya
c/o Matsushita Electric Ind. Co. Ltd.
Shiromi 1-chome, Chuo-ku
Osaka-shi, Osaka 540-6319 (JP)
• NOYA, Shigeto
c/o Matsushita Electric Ind. Co. Ltd.
Shiromi 1-chome, Chuo-ku
Osaka-shi, Osaka 540-6319 (JP)

• MUKAI, Yasuo
c/o Matsushita Electric Ind. Co. Ltd.
Shiromi 1-chome, Chuo-ku
Osaka-shi, Osaka 540-6319 (JP)
• FUJIWARA, Michiko
c/o Matsushita Electric Ind. Co. Ltd.
Shiromi 1-chome, Chuo-ku
Osaka-shi, Osaka 540-6319 (JP)
• IZUMI, Hidekatsu
c/o Matsushita Electric Ind. Co. Ltd.
Shiromi 1-chome, Chuo-ku
Osaka-shi, Osaka 540-6319 (JP)

(74) Representative: TBK-Patent
Bavariaring 4-6
80336 München (DE)

(54) ALKALINE DRY CELL

(57) To provide an alkaline dry battery that is excellent in discharge characteristics under a heavy load after storage at high temperature and suppresses polarization in pulse discharge under a heavy load, used is a nickel oxyhydroxide which is obtained by oxidizing a nickel hydroxide having a half width of a (101) face of 0.6 to 0.8 deg./$2\theta$ and a half width of a (001) face of 0.5 to 0.7 deg./$2\theta$ in powder X-ray diffraction, and which has an average nickel valence of 2.95 or more and an average particle diameter of 8 to 18 $\mu$m.

FIG. 1

**Description**

Technical Field

The present invention relates to an alkaline dry battery including at least nickel oxyhydroxide as a positive electrode active material.

Background Art

Alkaline manganese batteries in alkaline dry batteries have an inside-out type structure comprising: a positive electrode case that serves also as a positive electrode terminal; a cylindrical positive electrode mixture disposed in close contact to the positive electrode case within the positive electrode case; and a gelled negative electrode disposed via a separator in the central part of the positive electrode mixture. With widespread proliferation of digital devices in recent years, the load power of devices using the above-described alkaline manganese batteries has been gradually increasing, and therefore batteries having outstanding discharge characteristics under a heavy load have been demanded. In order to respond to such demands, for example, Patent Document 1 proposes the production of an alkaline dry battery having outstanding discharge characteristics under a heavy load by mixing nickel oxyhydroxide into a positive electrode mixture. Such alkaline dry batteries are put in practical use in recent years.
Patent Document 1: JAPANESE LAID-OPEN PATENT PUBLICATION No. 2000-48827

Disclosure of the Invention

Problem To be Solved by the Invention

As previously described above, since alkaline dry batteries including nickel oxyhydroxide as a positive electrode active material have more excellent discharge characteristics under a heavy load compared with that of conventional alkaline manganese batteries, they are spreading as a main power supply for digital devices represented by digital cameras. And, for example, instantaneous supply of electric power with a heavy load is needed for such digital cameras, in order to address various functions, such as light emission of stroboscopes, moving out and in of optical lens, displaying of liquid crystals, and writing of image data to recording media etc.
In conventional alkaline dry batteries including nickel oxyhydroxide, nickel hydroxide that has been formed by discharge acts as insulating material, and therefore supply of instantaneous electric power with a heavy load becomes impossible with advance of discharge, leading to problems of sudden power turned off of digital cameras. That is, in the above described alkaline batteries, the polarization in pulse discharge under a heavy load becomes larger as compared with polarization in alkaline dry batteries in the last stage of discharge, thereby resulting in occurrence of problem of unexpected battery exhaustion.
Alkaline dry batteries including nickel oxyhydroxide as a positive electrode active material have inferior discharge characteristics under a heavy load after storage at high temperature environment due to increase of resistance between a positive electrode case and a positive electrode mixture, and due to decrease in the amount of a dischargeable positive electrode active material etc. In order to cope with this problem, addition of zinc oxide into the positive electrode mixture etc. is proposed.
In consideration of the above-described problems, the present invention aims at providing an alkaline dry battery securing maintenance of outstanding discharge characteristics under a heavy load, and at the same time, suppression of polarization in pulse discharge under a heavy load, and improvement of a discharge characteristics under a heavy load after storage at high temperature environment. Specifically, the present invention aims at providing an alkaline dry battery allowing more preferable operational stability of the digital devices in use.

Means for Solving the Problem

In order to solve the above-described problems, the present invention provides an alkaline dry battery comprising:

a positive electrode including at least nickel oxyhydroxide as a positive active material, and including graphite as a conductive agent;
a negative electrode including zinc or a zinc alloy as a negative electrode active material;
a separator disposed between the positive electrode and the negative electrode;
a negative electrode current collector inserted in the negative electrode;
an alkaline aqueous solution included in the separator;

a battery case for accommodating the positive electrode, the negative electrode, the separator, the negative electrode current collector, and the alkaline aqueous solution; and

a sealing plate for sealing an opening of the battery case,

wherein the nickel oxyhydroxide is obtained by oxidation of a nickel hydroxide having a half width of a (101) face of 0.6 to 0.8 deg./2θ, and a half width of a (001) face of 0.5 to 0.7 deg./2θ in powder X-ray diffraction, and the nickel oxyhydroxide has an average nickel valence of 2.95 or more, and an average particle diameter of 8 to 18 μm.

The alkaline dry battery having the above described constitution of the present invention includes a nickel oxyhydroxide having a larger crystal size and a less content of nickel hydroxide, that is, it includes sufficient amount of nickel oxyhydroxide contributing to discharging function, as a result leading to exhibition of excellent discharge characteristics under a heavy load.

Furthermore, in the above-described alkaline dry battery, the positive electrode active material preferably further includes manganese dioxide, and the weight ratio of the nickel oxyhydroxide and the manganese dioxide is preferably 10 : 90 to 90 : 10.

Effect of the Invention

The aforementioned configuration provides outstanding discharge characteristics under a heavy load (initial stage and after storage at high temperature environment) to the alkaline dry battery of the present invention, and allows suppression of polarization in pulse discharge under a heavy load of the alkaline dry battery of the present invention. Thereby the alkaline dry battery of the present invention enables improvement in stability in operation when used in digital devices.

Brief Description of the Drawings

FIG. 1 is a front view, partly in cross section, of an alkaline dry battery according to an Example of the present invention.
FIG. 2 is a powder X-ray diffraction chart of a nickel hydroxide powder.

Best Mode for Carrying Out the Invention

As a result of wholehearted and repeated investigations about nickel oxyhydroxide as described later by the present inventors has lead to completion of the present invention. That is, since nickel oxyhydroxide used for alkaline dry batteries having outstanding discharge characteristics under a heavy load is generally used for secondary batteries, it is obtained by chemical oxidation of nickel hydroxide having controlled crystallinity in consideration of high rate charging and discharging characteristics. In view of this situation, the present inventors considered that optimization of crystallinity of nickel hydroxide as a raw material might provide a suitable nickel oxyhydroxide for alkaline dry batteries satisfying properties of digital devices represented by digital cameras. Therefore, the present inventors have repeated wholehearted investigations about the crystallinity of nickel hydroxide that serves as a raw material, and then found out that use of a nickel hydroxide having optimized crystallinity could provide suitable nickel oxyhydroxide for alkaline dry batteries, leading to completion of the present invention.

In detail, the present inventors have found out that an alkaline dry battery having outstanding discharge characteristics under a heavy load (initial stage and after storage at high temperature environment) could be realized by use of a nickel oxyhydroxide (powder) obtained by oxidation of a nickel hydroxide (powder) having a half width of a (101) face of 0.6 to 0.8 deg./2θ, and a half width of a (001) face of 0.5 to 0.7 deg./2θ in powder X-ray diffraction, the nickel oxyhydroxide having an average nickel valence of 2.95 or more and an average particle diameter of 8 to 18 μm, and that the use could suppress polarization in pulse discharge under a heavy load of the alkaline dry batteries and realize stabilization of operation of digital devices.

That is, the present invention also relates to a method for producing a nickel oxyhydroxide by oxidation of a nickel hydroxide (powder) having a half width of a (101) face of 0.6 to 0.8 deg./2θ, and a half width of a (001) face of 0.5 to 0.7 deg./2θ in powder X-ray diffraction.

As a process for oxidizing the above-described nickel hydroxide, conventionally publicly known methods may be used, and for example, the nickel oxyhydroxide can be obtained by heating the above-described nickel hydroxide in the presence of an oxidizing agent, such as sodium hypochlorite.

The nickel hydroxide (powder) having a half width of the (101) face of 0.6 to 0.8 deg./2θ, and a half width of the (001) face of 0.5 to 0.7 deg./2θ in powder X-ray diffraction may be produced using raw materials (for example, a nickel sulfate aqueous solution, a sodium hydroxide aqueous solution, and an aqueous ammonia solution) conventionally used for production of nickel hydroxide. The half width of the (101) face and the (001) face may be adjusted by control of the concentration of the above-described raw materials etc.

Here, when the nickel hydroxide as a raw material has a half width of the (101) face of less than 0.6 deg./2θ, the oxidation of the nickel hydroxide by sodium hypochlorite etc. becomes difficult, and the nickel oxyhydroxide obtained by oxidation easily tends to have an average nickel valence of less than 2.95. When obtaining the nickel oxyhydroxide by oxidation of nickel hydroxide, the obtained nickel oxyhydroxide still includes nickel hydroxide. The nickel hydroxide having a half width of the (101) face of less than 0.6 deg./2θ as a raw material increases the proportion of the nickel hydroxide included in the obtained nickel oxyhydroxide, and use of the obtained nickel oxyhydroxide concerned impedes discharge of the nickel hydroxide, resulting in poor discharge characteristics under a heavy load.

On the other hand, the nickel hydroxide as a raw material having a half width of the (101) face exceeding 0.8 deg./2θ provides only a smaller crystal size of the nickel oxyhydroxide obtained from the nickel hydroxide concerned. When the crystal size of the nickel oxyhydroxide is small, application of a heavy load pulse to the alkaline dry battery using the nickel oxyhydroxide concerned rapidly forms a nickel hydroxide layer as a product formed by discharge in the whole crystal surface, and thereby gives a large polarization at the time of pulse discharge under a heavy load, although the battery can exhibit an outstanding initial heavy load discharge characteristics.

Furthermore, a nickel hydroxide having a half width of a (001) face less than 0.5 deg./2θ makes production of a nickel oxyhydroxide having an average particle diameter of 8 μm or more difficult, and it disadvantageously provides a significantly lower filling factor (content) of the nickel oxyhydroxide in a positive electrode mixture.

On the other hand, a nickel hydroxide having a half width of a (001) face exceeding 0.7 deg./2θ has a lower crystal orientation, and use, in alkaline dry batteries, of the nickel oxyhydroxide obtained from the nickel hydroxide having such a lower crystal orientation reduces close contact between the nickel oxyhydroxide and graphite as a conductive agent (particles), etc., in a positive electrode mixture, therefore leading to a significantly lower discharge characteristics under a heavy load especially after storage at high temperature environment.

Furthermore, when the average nickel valence of the nickel oxyhydroxide obtained is less than 2.95 even in use of a nickel hydroxide powder having the half width of the (101) face of 0.6 to 0.8 deg./2θ, and the half width of the (001) face of 0.5 to 0.7 deg./2θ in powder X-ray diffraction, the proportion of the nickel hydroxide included in the nickel oxyhydroxide becomes larger, and this nickel hydroxide impedes the discharge of the nickel oxyhydroxide, resulting in significantly reduced discharge characteristics under a heavy load of the alkaline dry battery obtained.

Furthermore, the average particle diameter less than 8 μm of the above-described nickel oxyhydroxide significantly reduces the filling factor (content) of the nickel oxyhydroxide in the positive electrode mixture as mentioned above, leading to deterioration of the performance of the alkaline dry battery obtained. Furthermore, the average particle diameter more than 18 μm reduces close contact with respect to graphite particles as a conductive agent, resulting in significant deterioration of the discharge characteristics under a heavy load at an initial stage and after storage at high temperature environment.

Furthermore, the average nickel valence of 2.95 or more of the nickel oxyhydroxide provides a very slight proportion of the nickel hydroxide in the nickel oxyhydroxide, and advantageously reduces variation in the discharge characteristics of the alkaline dry battery obtained. From a viewpoint of more secure reduction of variation in the discharge characteristics of the alkaline dry battery obtained, the average nickel valence of the nickel oxyhydroxide is preferably 3.00 or more.

The weight ratio of the manganese dioxide and the nickel oxyhydroxide in the above-described positive electrode mixture is preferably in the range of 10 : 90 to 90 : 10. The weight ratio in this range can secure more excellent discharge characteristics under a heavy load of the obtained alkaline dry battery in an initial stage and after storage at high temperature environment.

In the alkaline dry battery of the present invention, covering of the above-described nickel oxyhydroxide with cobalt oxide to the above-described nickel oxyhydroxide by addition of 0.5 to 15% by weight of cobalt oxide having an average valence larger than 3.0 may further improve the current collection property of the positive electrode active material to provide an alkaline dry battery having a higher energy density.

Descriptions about nickel oxyhydroxide that constitutes main aspect of the present invention have been provided, but conventionally publicly known components are employable in other components of the alkaline dry battery of the present invention. Although more detailed descriptions of the present invention will be provided with reference to Experiments (Examples and Comparative examples included) hereinafter, the present invention is not limited only to these Examples and Comparative examples in any sense. In the following Experiments, production of nickel hydroxide, production of nickel oxyhydroxide, and production of alkaline dry battery were performed.

Experiment

(1) Production of nickel hydroxide

Prepared were an aqueous solution of 2.4 mol/l nickel sulfate, an aqueous solution of 5 mol/l sodium hydroxide, and an aqueous solution of 5 mol/l ammonia, and they were continuously supplied by a pump into a reactor provided with an impeller and maintained at 40°C at a flow rate of 0.5 ml/min, respectively. When the pH value in the reactor gave a constant value, and the balance of the metal salt (nickel sulfate etc.) concentration and the metal hydroxide particle concentration (nickel hydroxide etc.) gave a constant state, that is, when a stationary state was obtained, a suspension obtained by overflow (that is, a suspension that overflowed from the upper opening of the reactor etc.) was collected. A precipitate was separated from this suspension by decantation.

Subsequently, the above-described precipitate was treated with a sodium hydroxide aqueous solution of pH 13 to 14, and anions, such as sulfate ion in the metal hydroxide particles, were removed (that is, the precipitate was mixed with a sodium hydroxide aqueous solution). Then, the above-described precipitate was washed with water and dried. Thus, a nickel hydroxide (powder) having an average particle diameter of 12.3 $\mu$m based on a volume by a laser diffraction type particle size distribution meter was obtained (Nickel hydroxide powder 1).

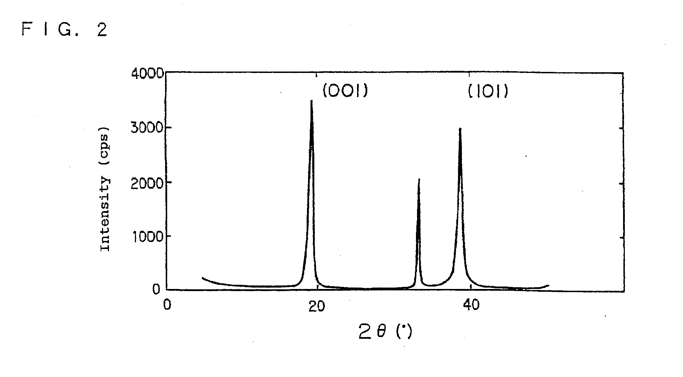

Thus produced nickel hydroxide powder 1 was measured for the crystal structure thereof using a powder X-ray diffractometry under conditions illustrated below. FIG. 2 illustrates a powder X-ray diffraction chart of the above-described nickel hydroxide powder 1.

- Measuring apparatus : a powder X-ray diffractometer "RINT1400" product of Rigaku Corporation,
- Anticathode : Cu
- Filter : Ni
- Tube voltage : 40 kV
- Tube current : 100 mA
- Sampling angle : 0.02 deg.
- Scanning speed : 3.0 deg./min.
- Divergence slit : 1/2 deg.
- Scattering slit : 1/2 deg.

An X-ray diffraction pattern using CuK$\alpha$ rays confirmed the presence of $\beta$-Ni (OH)$_2$ type single phase, the half width of the peak of the (101) face in the vicinity of 2$\theta$ = 37 to 40° gave 0.92 deg. /2$\theta$, and the half width of the peak of the (001) face located in the vicinity of 2$\theta$ = 18 to 21° gave 0.90 deg./2$\theta$. The half widths are effective values, when the crystallinity of the nickel hydroxide powder is controlled in consideration of high rate charging and discharging characteristics of a secondary battery.

Next, in order to obtain nickel hydroxide powders having half widths of the (101) face and the (001) face different from the half widths of the above-described nickel hydroxide powder 1, nickel hydroxide powders 2 to 10 were produced by the same method as in the above-described nickel hydroxide powder 1, except for having varied the concentration of the aqueous ammonia solution and the concentration of the sodium hydroxide aqueous solution. Nickel hydroxide powder 10 included only fine particles having an average particle diameter of 6.4 $\mu$m.

In order to obtain nickel hydroxide powders having different average particle diameters from the average particle diameter of the nickel hydroxide powder 1 having the half width of the (101) face of 0.78 deg./2$\theta$ and the half width of the (001) face of 0.61 deg./2$\theta$, nickel hydroxide powders 11 to 15 were obtained using the same conditions as the condition of the nickel hydroxide powder 1, except for having varied the flow rate of the nickel sulfate solution, the aqueous ammonia solution, and the sodium hydroxide aqueous solution.

(2) Production of nickel oxyhydroxide powder

Next, each of the nickel hydroxide powders 1 to 15 were introduced into an aqueous solution of 0.5 mol/L sodium hydroxide. Then, a sodium hypochlorite aqueous solution (available chlorine concentration: 12 wt%) was added so as to give a 1.2 of an oxidizing agent equivalent. The system was agitated at a reaction atmosphere temperature of 45°C for 3 hours (chemical oxidation treatment), to obtain nickel oxyhydroxide powders 1 to 15. The obtained nickel oxyhydroxide powders 1 to 15 were sufficiently washed with water, and dried under vacuum at 60°C (positive electrode active material powders 1 to 15).

Here, the average nickel valence of the above-described nickel oxyhydroxide powders 1 to 15 were calculated by following chemical measurement methods (a) and (b).

(a) Measurement of nickel weight ratio by a weight method (dimethylglyoxime method)

Concentrated nitric acid 10 cm$^3$ was added to 0.05 g of a nickel oxyhydroxide powder, and dissolved by heating. A tartaric acid aqueous solution 10 cm$^3$ was added, ion exchange water was further added, and the whole volume was adjusted to 200 cm$^3$. After the pH of the obtained solution was adjusted using aqueous ammonia and acetic acid, 1 g of potassium bromate was added to the above-described solution to oxidize the cobalt ion having a possibility giving error of measurement into a trivalent state. Subsequently, ethanol solution of dimethylglyoxime was added in the above-described solution with heating and agitating to make the nickel (II) ion be precipitated as a dimethylglyoxime complex compound. Then, the precipitate formed was collected by suction filtration, and dried under 110°C atmosphere. The weight of the precipitate was measured. After this operation, the nickel weight ratio included in the above-described nickel oxyhydroxide (positive electrode active material) powder was calculated, according to an equation:

```
Nickel weight ratio = {weight of precipitate (g) × 0.2032}
/ {weight of nickel oxyhydroxide (g)}
```

(b) Measurement of average nickel valence by oxidation-reduction titration

Potassium iodide 1 g and 25 cm$^3$ of sulfuric acid were added to 0.2 g of nickel oxyhydroxide powder, and the mixture was sufficiently agitated to completely dissolve the components. In this process, nickel ion having a higher valence oxidized potassium iodide into iodine, and as a result, the nickel ion concerned was reduced to divalent nickel ion. After the obtained solution was kept standing for 20 minutes, an acetic acid-ammonium acetate aqueous solution as a pH buffer solution, and ion exchange water were added to terminate the reaction. Formed and separated iodine was titrated with an aqueous solution of 0.1 mol/L sodium thiosulfate. Since the titration value in this case reflects the amount of the metal ion having a valence larger than 2 mentioned above, the average nickel valence of each nickel oxyhydroxide powder was estimated using the weight ratio of the contained nickel obtained in above-described (a).

In order to obtain nickel oxyhydroxide powders having a different average particle diameter, a nickel hydroxide powder 4 having a half width of the (101) face of 0.78 deg./2θ, and a half width of the (001) face of 0.61 deg./2θ was treated with a sodium hypochlorite aqueous solution (available-chlorine concentration: 12 wt%) having oxidizing agent equivalents varied from 0.9 to 1.4 to obtain nickel oxyhydroxide powders 16 to 18. Tables 1 to 3 illustrate half widths of the (101) face and the (001) face of the nickel hydroxide powders, the average particle diameters of the nickel oxyhydroxide powders, and the average nickel valences of the nickel oxyhydroxide powders 1 to 18.

(3) Production of alkaline dry battery

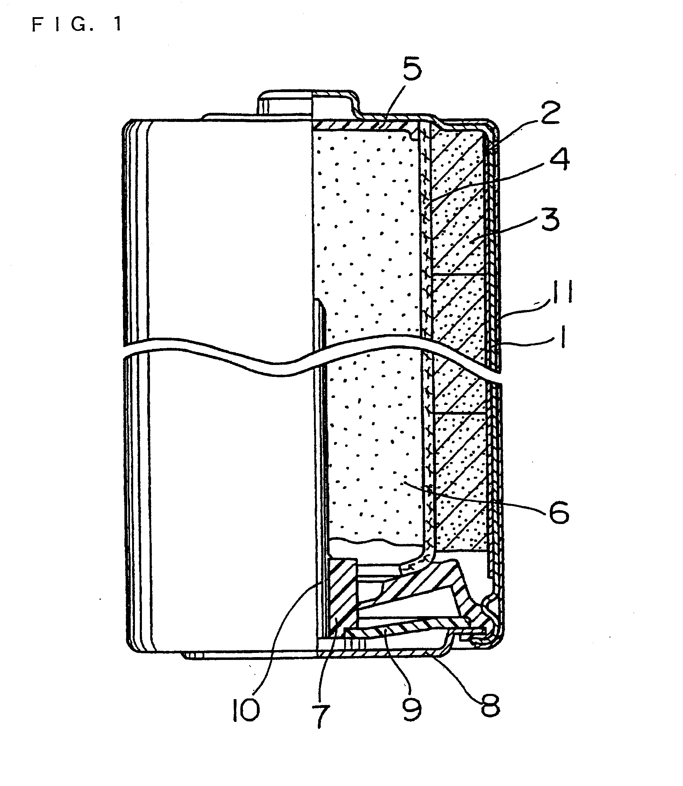

Next, alkaline dry batteries 1 to 18 of the present invention were produced using the above-described nickel oxyhydroxides 1 to 18. FIG. 1 illustrates a frot view, partly in cross section, of the alkaline dry battery produced here.
In detail, firstly, a graphite coating film 2 was formed in a positive electrode case 1 made of a steel sheet with nickel plating given thereon. A plurality of short cylindrical positive electrode mixture pellets 3 including nickel oxyhydroxide or manganese dioxide as a principal component were inserted into the positive electrode case 1, and were remolded in the positive electrode case 1 to make the above-described positive electrode mixture pellet 3 be closely contacted to the interior surface of the positive electrode case 1.
In more detail, nickel oxyhydroxide powder 1, graphite, and electrolyte were mixed at a weight ratio of 100 : 6.5 : 1, and subsequently, the obtained mixture was uniformly agitated and mixed by a mixer so that the above-described mixture might give a uniform granule size. The obtained granular material was compression molded into a hollow cylinder shape to obtain a positive electrode mixture pellet 3.
A separator 4 and an insulation cap 5 were inserted inside the positive electrode mixture pellet 3, and subsequently, an electrolyte was poured in order to wet the separator 4 and the positive electrode mixture pellet 3.
An aqueous solution of potassium hydroxide (40% by weight) was used for the electrolyte.
A gelled negative electrode 6 was charged inside the separator 4 after pouring of the electrolyte. The gelled negative electrode 6 was constituted by sodium polyacrylate as a gelling agent; and alkaline electrolyte; and a negative electrode active material consisting of a zinc alloy powder containing bismuth (Bi) 250 ppm, indium (In) 250 ppm, and aluminum (Al) 35 ppm. Then, a sealing plate 7 made of a resin; a bottom plate 8 serving also as a negative electrode terminal; and a negative electrode current collector 10 integrated with an insulation washer 9 were inserted into the gelled negative electrode 6. Subsequently, the open end of the positive electrode case 1 was crimped to the periphery of the bottom plate 8 via the edge of the sealing plate 7 made of a resin, and thus the opening of the positive electrode case 1 was sealed. Subsequently, the outer surface of the positive electrode case 1 was covered with an outer jacket label 11 to obtain an alkaline dry battery 1 of a size of AA having a structure illustrated in FIG. 1. Except for having used nickel oxyhydroxide powders 2 to 18 instead of nickel oxyhydroxide powder 1, alkaline dry batteries 2 to 18 were produced by the same method as in the above-described alkaline dry battery 1.

Furthermore, in order to examine the mixing ratio of nickel oxyhydroxide and manganese dioxide, alkaline dry batteries 19 to 31 were produced by the same conditions as in the above-described alkaline dry battery 1 except for having varied the weight ratio of the nickel oxyhydroxide powder 1 or 4 and the manganese dioxide powders within a range of 0 to 100%. In addition, in the alkaline dry battery 25, only manganese dioxide was used (100%) as the positive electrode active material.

[Evaluation test]

(1) Discharge characteristics under a heavy load

Alkaline dry batteries 1 to 31 produced above were measured for the discharge characteristics under a heavy load at the initial stage and after two-week storage at 60°C. In detail, the above-described alkaline dry batteries 1 to 31 were subjected to continuous discharge at a constant electric power of 1 W at 20°C, and the duration until the voltage reached an end voltage of 0.9 V was measured.
The duration (average of ten pieces) of the alkaline dry battery 1 was set as 100, the averages of the respective 10 alkaline dry batteries 2 to 31 were obtained for measured values, and they were evaluated as an index to the above described value of 100. Tables 1 to 5 illustrates results.

(2) Pulse discharge characteristics under a heavy load

As evaluation for assumption of actual use for alkaline dry batteries in digital cameras, 10 cycles of a pulseischarge including a pulse for 1.5 W for 2 seconds to 0.65 W for 28 seconds (a discharge with a constant electric power of 1.5 W for 2 seconds and continuously a discharge with a constant electric power of 0.65 W for 28 seconds) were carried out for every one hour, and the number of cycles until the voltage reached 1.05 V, and the voltage drop width at 1.05 V ($\Delta$V) were obtained.
The number of cycles of the alkaline dry battery 1 (average of ten pieces) was set as 100, the averages of the respective 10 alkaline dry batteries 2 to 31 were obtained for measured values, and they were evaluated as an index to the above described value of 100. Tables 1 to 5 illustrates results.
[Table 1]

| Nickel hydroxide / nickel oxyhydroxide number | Example number | Battery number | Half width of nickel hydroxide | | Nickel oxyhydroxide | | Discharge characteristics under a heavy load | | Pulse discharge characteristics under a heavy load | |
|---|---|---|---|---|---|---|---|---|---|---|
| | | | Face 101 | Face 001 | Average particle diameter ($\mu$m) D50 | Average Ni valence | Initial (index) | After storage at high temperature environment (index) | Number of cycles (index) | $\Delta$V(mV) |
| 1 | Comparative example 1 | 1 | 0.92 | 0.90 | 12.3 | 2.99 | 100 | 100 | 100 | 325 |
| 2 | Comparative example 2 | 2 | 0.91 | 0.75 | 12.8 | 3.02 | 102 | 101 | 103 | 32 |
| 3 | Comparative example 3 | 3 | 0.87 | 0.62 | 12.6 | 3.00 | 104 | 103 | 105 | 319 |
| 4 | Example 1 | 4 | 0.78 | 0.61 | 11.7 | 3.01 | 101 | 118 | 121 | 280 |
| 5 | Example 2 | 5 | 0.61 | 0.59 | 11.6 | 2.99 | 99 | 116 | 125 | 278 |
| 6 | Comparative example 4 | 6 | 0.52 | 0.60 | 11.8 | 2.93 | 85 | 91 | 88 | 341 |
| 7 | Comparative example 5 | 7 | 0.72 | 0.76 | 12.4 | 2.97 | 91 | 102 | 110 | 313 |
| 8 | Example 3 | 8 | 0.70 | 0.68 | 12.3 | 2.98 | 99 | 115 | 121 | 279 |
| 9 | Example 4 | 9 | 0.69 | 0.51 | 12.5 | 2.99 | 100 | 119 | 126 | 275 |
| 10 | Comparative example 6 | 10 | 0.68 | 0.46 | 6.4 | 2.99 | 90 | 102 | 96 | 332 |

As results of the alkaline dry batteries 4, 5, 8, and 9 (Examples 1 to 4) given in Table 1 illustrates, in use of the nickel oxyhydroxide powder obtained from the nickel hydroxide having the half width of the (101) face of 0.6 to 0.8 deg./ 2θ, and the half width of the (001) face of 0.5 to 0.7 deg./2θ in powder X-ray diffraction, since the nickel oxyhydroxides have a moderate crystal size and a crystal orientation, the polarization in pulse discharge under a heavy load was suppressed, while maintaining outstanding discharge characteristics under a heavy load (at initial stage and after storage at high temperature environment), leading to securely stable operation of the digital camera. Especially increase in the number of cycles led to the increased number of photographable pictures with the digital camera.

[Table 2]

| Nickel hydroxide / nickel oxyhydroxide number | Example number | Battery number | Half width of nickel hydroxide | | Nickel oxyhydroxide | | Discharge characteristics under a heavy load | | Pulse discharge characteristics under a heavy load | |
|---|---|---|---|---|---|---|---|---|---|---|
| | | | Face 101 | Face 001 | Average particle diameter ($\mu$m) D50 | Average Ni valence | Initial (index) | After storage at high temperature environment (index) | Number of cycles (index) | $\Delta$V(mV) |
| 1 | Comparative example 1 | 1 | 0.92 | 0.9 | 12.3 | 2.99 | 100 | 100 | 100 | 325 |
| 11 | Comparative example 7 | 11 | 0.77 | 0.61 | 6.7 | 2.99 | 94 | 95 | 106 | 316 |
| 12 | Example 5 | 12 | 0.76 | 0.61 | 8.3 | 2.97 | 100 | 111 | 115 | 289 |
| 4 | Example 1 | 4 | 0.78 | 0.61 | 11.7 | 3.01 | 101 | 118 | 121 | 280 |
| 13 | Example 6 | 13 | 0.78 | 0.61 | 14.7 | 2.98 | 101 | 119 | 120 | 282 |
| 14 | Example 7 | 14 | 0.78 | 0.60 | 17.8 | 2.97 | 100 | 113 | 119 | 287 |
| 15 | Comparative example 8 | 15 | 0.78 | 0.61 | 21.3 | 3.00 | 91 | 89 | 109 | 310 |

As the alkaline dry batteries 11 and 15 of Table 2 illustrate, even in case of the nickel oxyhydroxide powder obtained from the nickel hydroxide powder having the half width of the (101) face of 0.6 to 0.8 deg./2θ and the half width of the (001) face of 0.5 to 0.7 deg./2θ in powder X-ray diffraction, and having 2.95 or more of the average nickel valence, the average particle diameter less than 8 μm reduces the moldability of the positive electrode mixture, and the average particle diameter more than 18 μm reduces the electron conductivity of the nickel oxyhydroxide in the last stage of discharge. Thereby, the internal resistance of the alkaline dry battery increased and the discharge characteristics under a heavy load at initial stage and after storage at high temperature environment significantly deteriorated.

[Table 3]

| Nickel hydroxide / nickel oxyhydroxide number | Example number | Battery number | Half width of nickel hydroxide | | Nickel oxyhydroxide | | Discharge characteristics under a heavy load | | Pulse discharge characteristics under a heavy load | |
|---|---|---|---|---|---|---|---|---|---|---|
| | | | Face 101 | Face 001 | Average particle diameter (μm) D50 | Average Ni valence | Initial (index) | After storage at high temperature environment (index) | Number of cycles (index) | $\Delta$V(mV) |
| 1 | Comparative example 1 | 1 | 0.92 | 0.9 | 12.3 | 2.99 | 100 | 100 | 100 | 325 |
| 4 | Example 1 | 4 | 0.78 | 0.61 | 11.7 | 3.01 | 101 | 118 | 121 | 280 |
| 16 | Example 8 | 16 | 0.78 | 0.61 | 11.7 | 2.98 | 100 | 119 | 115 | 288 |
| 17 | Example 9 | 17 | 0.78 | 0.61 | 11.7 | 2.95 | 98 | 115 | 113 | 303 |
| 18 | Comparative example 9 | 18 | 0.78 | 0.61 | 11.7 | 2.92 | 87 | 95 | 92 | 335 |

**EP 1 837 938 A1**

As the results of the alkaline dry battery 18 illustrated in Table 3 illustrates, even in case of the nickel oxyhydroxide powder obtained from the nickel hydroxide powder having the half width of the (101) face of 0.6 to 0.8 deg./2θ and the half width of the (001) face of 0.5 to 0.7 deg./2θ in powder X-ray diffraction, and having the average particle diameter in the range of 8 to 18 μm, less than 2.95 of the average nickel valence of the nickel oxyhydroxide powder increases the proportion of the nickel hydroxide included in the nickel oxyhydroxide, and the nickel hydroxide impeded discharge of the nickel oxyhydroxide, and therefore significantly reduced the discharge characteristics under a heavy load of the battery at an initial stage and after storage at high temperature environment.

13

[Table 4]

| Nickel hydroxide / nickel oxyhydroxide number | Example number | Battery number | Weight ratio (wt%) | | Discharge characteristics under a heavy load | | Pulse discharge characteristics under a heavy load | |
|---|---|---|---|---|---|---|---|---|
| | | | Nickel oxyhydroxide 1 | Manganese dioxide | Initial (index) | After storage at high temperature environment (index) | Number of cycles (index) | AV (mV) |
| 1 | Comparative example 1 | 1 | 100 | 0 | 100 | 100 | 100 | 325 |
| 1 | Example 10 | 19 | 90 | 10 | 97 | 101 | 104 | 317 |
| 1 | Example 11 | 20 | 80 | 20 | 95 | 106 | 99 | 324 |
| 1 | Example 12 | 21 | 60 | 40 | 92 | 106 | 97 | 327 |
| 1 | Example 13 | 22 | 40 | 60 | 92 | 107 | 98 | 325 |
| 1 | Example 14 | 23 | 20 | 80 | 88 | 100 | 87 | 343 |
| 1 | Example 15 | 24 | 10 | 90 | 81 | 83 | 77 | 358 |
| - - | Comparative example 10 | 25 | 0 | 100 | 56 | 49 | 54 | 365 |

Table 4 illustrates respective discharge characteristics of the alkaline dry batteries 1 and 19 to 25 produced by mixing the nickel oxyhydroxide powder 1 obtained from the nickel hydroxide powder 1 having the half width of the (101) face of 0.92 deg./2θ and the half width of the (001) face of 0.90 deg./2θ in powder X-ray diffraction, and a manganese dioxide powder at various proportions.

Table 4 illustrates that the alkaline dry battery batteries 1 and 19 to 24 have more outstanding discharge characteristics under a heavy load and pulse discharge characteristics as compared with the characteristics of the battery 25 including only manganese dioxide as an active material and excluding nickel oxyhydroxide. However, the results illustrate that since nickel oxyhydroxide 1 not according to the present invention is used, the performance deteriorates gradually with increase in amount of addition of the manganese dioxide, and addition of the manganese dioxide has advantageous synergistic effect only for improvement of discharge characteristics under a heavy load after storage at high temperature environment.

[Table 5]

| Nickel hydroxide / nickel oxyhydroxide number | Example number | Battery number | Weight ratio (wt%) | | Discharge characteristics under a heavy load | | Pulse discharge characteristics under a heavy load | |
|---|---|---|---|---|---|---|---|---|
| | | | Nickel oxyhydroxide 1 | Manganese dioxide | Initial (index) | After storage at high temperature environment (index) | Number of cycles (index) | $\Delta V$ (mV) |
| 4 | Comparative example 1 | 4 | 100 | 0 | 101 | 118 | 121 | 280 |
| 4 | Example 16 | 26 | 90 | 10 | 99 | 124 | 127 | 274 |
| 4 | Example 17 | 27 | 80 | 20 | 97 | 119 | 122 | 281 |
| 4 | Example 18 | 28 | 60 | 40 | 96 | 122 | 123 | 279 |
| 4 | Example 19 | 29 | 40 | 60 | 97 | 123 | 118 | 285 |
| 4 | Example 20 | 30 | 20 | 80 | 94 | 114 | 110 | 297 |
| 4 | Example 21 | 31 | 10 | 90 | 91 | 106 | 101 | 324 |
| - - | Comparative example 10 | 25 | 0 | 100 | 56 | 49 | 54 | 365 |

Table 5 illustrates each discharge characteristics of the alkaline dry batteries 4, 26 to 31, and 25 produced by mixing the nickel oxyhydroxide powder 4 obtained from the nickel hydroxide powder 4 having the half width of the (101) face of 0.78 deg./2θ and the half width of the (001) face of 0.61 deg./2θ in powder X-ray diffraction with various manganese dioxide powders. Tables 4 and 5 illustrate that use of the nickel oxyhydroxide according to the present invention can provide more improved discharge characteristics under a heavy load after storage at high temperature environment as well as discharge characteristics under a heavy load and pulseischarge characteristics than the characteristics in case of nickel oxyhydroxide for conventional secondary batteries even in use with mixing of manganese dioxide.

INDUSTRIAL APPLICABILITY

Since the alkaline dry battery of the present invention has outstanding discharge characteristics under a heavy load at an initial stage and after storage at high temperature environment and pulse discharge characteristics under a heavy load, the battery is especially useful as a power supply for digital devices.

**Claims**

1.  An alkaline dry battery comprising:

> a positive electrode including at least nickel oxyhydroxide as a positive electrode active material, and including graphite as a conductive agent;
> a negative electrode including zinc or a zinc alloy as a negative electrode active material;
> a separator disposed between the positive electrode and the negative electrode;
> a negative electrode current collector inserted in the negative electrode;
> an alkaline aqueous solution included in the separator;
> a battery case for accommodating the positive electrode, the negative electrode, the separator, the negative electrode current collector, and the alkaline aqueous solution; and
> a sealing plate for sealing an opening of the battery case,
> wherein the nickel oxyhydroxide is obtained by oxidation of a nickel hydroxide having a half width of a (101) face of 0.6 to 0.8 deg./2θ, and a half width of a (001) face of 0.5 to 0.7 deg./2θ in a powder X-ray diffraction, and the nickel oxyhydroxide has an average nickel valence of 2.95 or more and an average particle diameter of 8 to 18 μm.

2.  The alkaline dry battery according to Claim 1, wherein the positive electrode active material further includes manganese dioxide, and the weight ratio of the nickel oxyhydroxide and the manganese dioxide is 10 : 90 to 90 : 10.

EP 1 837 938 A1

F I G. 1

18

F I G. 2

| **INTERNATIONAL SEARCH REPORT** | International application No. |
|---|---|
| | PCT/JP2006/307193 |

A. CLASSIFICATION OF SUBJECT MATTER
*H01M4/52*(2006.01), *H01M4/06*(2006.01), *H01M6/06*(2006.01)

According to International Patent Classification (IPC) or to both national classification and IPC

B. FIELDS SEARCHED

Minimum documentation searched (classification system followed by classification symbols)
H01M4/06, H01M4/52, H01M6/06

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-246226 A (Mitsui Mining & Smelting Co., Ltd.), 14 September, 1999 (14.09.99), Claims 1 to 7; Par. Nos. [0009], [0027] (Family: none) | 1-2 |
| Y | JP 2005-71991 A (Matsushita Electric Industrial Co., Ltd.), 17 March, 2005 (17.03.05), Par. Nos. [0031], [0033] to [0034] & WO 2005/015666 A1 | 1-2 |
| A | JP 2004-111389 A (Toshiba Battery Co., Ltd.), 08 April, 2004 (08.04.04), Full text (Family: none) | 1-2 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 July, 2006 (14.07.06) | 25 July, 2006 (25.07.06) |

| Name and mailing address of the ISA/ Japanese Patent Office | Authorized officer |
|---|---|
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000048827 A